Europäisches Patentamt

European Patent Office

Office européen des brevets

(11) Veröffentlichungsnummer: **0 481 219 A2**

# EUROPÄISCHE PATENTANMELDUNG

(21) Anmeldenummer: **91115550.5**

(51) Int. Cl.⁵: **F16L 55/24**

(22) Anmeldetag: **13.09.91**

(30) Priorität: **16.10.90 DE 9014365 U**

(43) Veröffentlichungstag der Anmeldung:
**22.04.92 Patentblatt 92/17**

(84) Benannte Vertragsstaaten:
**AT BE ES FR GB IT**

(71) Anmelder: **KARL KÜFNER KG**
**Filter- und Webeblattfabrik, Postfach 25**
**W-7470 Albstadt 2(DE)**

(72) Erfinder: **Meiritz, Horst**
**Unter Nank 51**
**W-7470 Albstadt 2(DE)**
Erfinder: **Wittmann, Karl-Heinz**
**Johannes-Brahms-Strasse 35**
**W-7470 Albstadt 2(DE)**
Erfinder: **Sebig, Jörg**
**Auf Gstangen 2**
**W-7460 Balingen(DE)**

(74) Vertreter: **Eitle, Werner, Dipl.-Ing. et al**
**Hoffmann, Eitle & Partner Patentanwälte**
**Arabellastrasse 4**
**W-8000 München 81(DE)**

(54) **Anschlussstück.**

(57) Ein Anschlußstück für den Anschluß von Rohr-
oder Schlauchleitungen an von einem flüssigen oder
gasförmigen Strömungsmittel durchströmten Geräten, wie z.B. Pumpen, Öl- oder Gasbrenner, Druckwasserreinigungsgeräte o.dgl., das eine zum lösbaren Anschließen an die Leitung ausgebildete Seite
und eine andere zum lösbaren Anschließen an den
Strömungsmitteleinlaß des Gerätes oder an einen an
diesen Einlaß angesetzten Leitungsabschnitt ausgebildete Seite sowie einen sich von der einen zur
anderen Seite erstreckenden Durchströmungskanal
(5) hat. In diesem Durchströmungskanal ist ein den
Kanalquerschnitt völlig überspannendes Siebgewebe
(6) angeordnet, das in Längsrichtung des Durchströmungskanals Bauform hat, d.h. V-förmig ausgewölbt
ist.

Fig. 3

Die Erfindung betrifft ein Anschlußstück für den Anschluß von Rohr- oder Schlauchleitungen an von einem flüssigen oder gasförmigen Strömungsmittel durchströmte Geräte, wie z.B. Pumpen, Öl- oder Gasbrenner, Druckwasserreinigungsgeräte od.dgl., das eine zum lösbaren Anschließen an die Leitung ausgebildete Seite und eine weitere zum lösbaren Anschließen an den Strömungsmitteleinlaß des Gerätes oder an einen an diesen Einlaß angesetzten Leitungsabschnitt ausgebildete Seite hat. Derartige Anschlußstücke sind bekannt und üblich. Sie dienen auch dazu, den Durchmesser der anzuschließenden Rohr- oder Schlauchleitung an den meist von einem Stutzen gebildeten Strömungsmitteleinlaß der Geräte anzupassen.

Es ist auch bekannt, derartige Anschlußstücke zur Rückhaltung von Verunreinigungen mit einem den gesamten Querschnitt des Durchströmungskanals völlig überspannenden Siebgewebe auszustatten. Hierdurch wird es möglich, die an die Rohr- oder Schlauchleitungen oder an das Anschlußstück angesetzten Geräte nicht mehr selbst mit Eingangssieben versehen zu müssen. Da das Anschlußstück leicht lösbar an das Gerät und die Rohr- oder Schlauchleitung anschließbar sein kann, ist ein einfaches und wirkungsvolles Reinigen des Siebes bei abmontiertem Anschlußstück sowie ein einfaches Auswechseln des Siebes mit dem Anschlußstück möglich.

Es ist bereits bekannt, das Siebgewebe derart zu gestalten, daß es eine in Längsrichtung des Strömungskanals sich erstreckende konische Form oder Kegelform hat (DE-U-1 794 015). Dadurch wird erreicht, daß die Siebfläche des Siebgewebes wesentlich größer ist als die Querschnittsfläche des Durchströmungskanals, wodurch geringere Druckverluste durch das Sieb erhalten werden. Derartige konische oder kegelförmige Siebe haben jedoch den Nachteil, daß sie relativ geringe Formstabilität besitzen und daher, nicht zuletzt bei der Reinigung des Siebes, leicht verformt und beschädigt werden können. Durch ihre Formgebung erhalten sie außerdem vielfach eine ungleichmäßige Maschenweite.

Der Erfindung liegt daher die Aufgabe zugrunde, das Sieb in dem Anschlußstück der eingangs genannten Gattung derart zu gestalten, daß es bei gleicher Maschenweite in jedem Siebabschnitt hohe Formstabilität besitzt und einen gleichmäßigen Strömungsdurchtritt über die gesamte Siebkontur gewährleistet. Dies wird bei dem eingangs genannten Anschlußstück erfindungsgemäß dadurch erreicht, daß das Siebgewebe in Längsrichtung des Durchströmungskanals des Anschlußstückes im wesentlichen V-Form hat. Dabei kann das Siebgewebe mit den seitlichen Rändern seiner beiden die Schenkel der V-Form bildenden Abschnitte fest an die Wandung des Anschlußstückes angeschlossen sein, wodurch eine hohe Formstabilität des Siebes und hohe Sicherheit gegen Beschädigungen gegeben ist. Durch die vorgenannte erfindungsgemäße Ausbildung wird auch eine absolut gleichbleibende Maschenweite in jedem Formkonturenabschnitt des Filtergewebes des Anschlußstückes erhalten, die bei den bisher bekannten Anschlußstücken mit verformten Siebgeweben nicht erreicht werden konnte.

Bei einer bevorzugten Ausführungsform kann das Anschlußstück aus Gußmaterial, z.B. Kunststoff, bestehen, wobei das Siebgewebe an den Seitenrändern seiner V-Schenkel in das Anschlußstück eingegossen ist. Ferner können die beiden die Schenkel der V-Form bildenden Abschnitte des Siebes je einen im wesentlichen sich senkrecht zum Strömungskanal erstreckenden Rand haben, der ebenfalls in die Wandung des Anschlußstückes eingegossen sein kann.

Das Anschlußstück kann zusammen mit dem Siebgewebe einstückig ausgebildet sein. Bei dieser Ausführung haben auch Nichtfachleute keinerlei Schwierigkeiten mit der Handhabung des Anschlußstückes, insbesondere beim Reinigen des Siebes. Es ist aber auch möglich, das Anschlußstück mit dem Siebgewebe mehrteilig auszubilden, wobei das Siebgewebe als eigenes Bauteil in Form eines Siebelements zwischen zwei voneinander trennbaren Gehäuseteilen lösbar eingesetzt sein kann. Diese Ausführung kann jedoch nach Zerlegen für den Nichtfachmann zu Problemen beim Wiederzusammensetzen der Bauteile führen. Zweckmäßig ist die V-Form des Siebgewebes ausgerundet, wobei die Tiefe der V-Form größer sein kann als der Kanalquerschnitt.

Zum Anschluß an die Schlauch- oder Rohrleitung und bzw. oder an den Strömungsmitteleinlaß des Geräts kann das Anschlußstück an seinen Anschlußseiten mit Schraubgewinden oder Gewindeansätzen versehen sein. Um das beim An- und Abschrauben notwendige Drehen des Anschlußstücks gegenüber der Leitung oder dem Gerät zu erleichtern, kann es an seiner Außenseite kantig ausgebildet, z.B. Sechskantform haben und/oder zumindest stellenweise aufgerauht oder mit einer Rändelung versehen sein.

In der Zeichnung ist eine besonders vorteilhafte Ausführungsform des erfindungsgemäßen Anschlußstückes dargestellt, das im folgenden näher beschrieben wird.

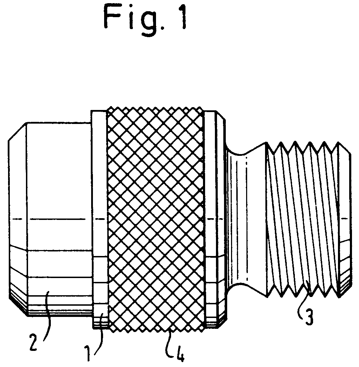

Fig. 1    zeigt diese Ausführungsform in Seitenansicht,

Fig. 2    zeigt eine Stirnansicht dieser Ausführungsform auf die in Fig. 1 rechte Stirnseite des Rohrstücks,

Fig. 3    ist ein Axiallängsschnitt durch diese Ausführungsform,

Fig. 4    ist ein Axiallängsschnitt durch diese Ausführungsform in einer zur Schnittebene von Fig. 3 senkrechten Schnittebene,

Fig. 5 ist ein Querschnitt durch diese Ausführungsform nach Linie V-V in Fig. 3.

Bei dem in der Zeichnung dargestellten Ausführungsbeispiel besteht das Anschlußstück aus einem kurzen Rohrstück, das einen Hauptteil 1 und zwei Endteile 2, 3 hat, die mit dem Hauptteil 1 zusammen einstückig aus Kunststoff ausgebildet sind. Zum Anschrauben an eine Schlauch- oder Rohrleitung oder an den Strömungsmitteleinlaß eines Gerätes sind der Endteil 2 mit einem Innengewinde und der Endteil 3 mit einem Außengewinde versehen, die an die entsprechenden Gegengewinde der Leitung und des Geräts angepaßt sind. Zum leichteren Fassen und Drehen des Anschlußstückes bei seinem Anschließen an die Leitung oder das Gerät ist der Hauptteil 1 des Rohrstückes an seiner Außenseite mit einer Rändelung 4 ausgestattet.

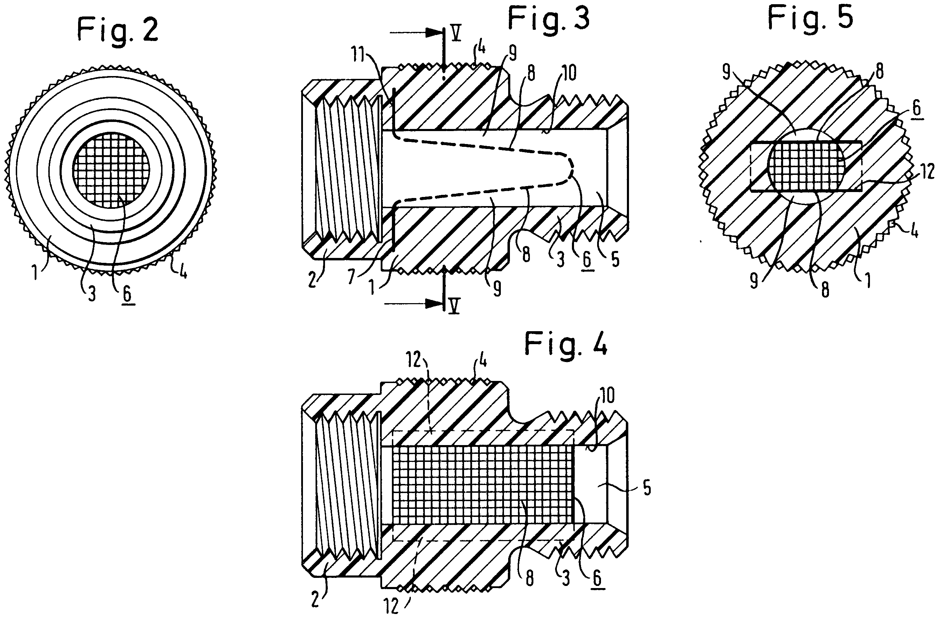

In diesem Rohrstück ist ein Durchströmungskanal 5 ausgebildet, über dessen Querschnitt ein in Richtung der Längsachse des Rohrstückes ausgewölbtes Siebgewebe 6 hinweggespannt ist, das vorteilhaft aus Metall besteht und mit seinem Rand 7 im Spritzgußverfahren in das Rohrstück eingebettet ist. Die Auswölbung des Siebgewebes ist nicht zylindrisch,sondern in einer bestimmten Längsschnittebene des Rohrstücks V-förmig, so daß es zwischen seiner Rand- und seiner Bodenkrümmung ebenflächige Seitenwände 8 hat, die zwischen sich und der gegenüberliegenden Innenwand 10 des Rohrstücks im Kanalquerschnitt segmentförmige Zwischenräume 9 ergeben. Fig. 4 zeigt, daß das Siebgewebe 6 nicht nur an seinem Stirnrand 11 sondern auch am Rand 12 seiner Seitenwände 8 in den Kunststoff des Rohrstückes eingebettet ist.

Die in Kanalachse gemessene Auswölbungstiefe des Siebgewebes 6 kann nach der erforderlichen Größe der Siebfläche gewählt werden. Bei der dargestellten Ausführungsform ist die Tiefe der V-förmigen Auswölbung wesentlich größer, nämlich mehr als doppelt so groß als der Querschnitt des Durchströmungskanals in dem das Siebgewebe enthaltenden Kanalabschnitt. Durch die V-Form erhält das Siebgewebe eine hohe Stabilität, so daß es dem Druck sowohl des Strömungsmittels als auch anderen mechanischen Belastungen, z.B. durch Fremdkörper, dauerhaft widerstehen kann.

Die Durchströmungsrichtung des Rohrstücks kann beliebig sein. Eine besonders gute Siebwirkung und Reinigungsmöglichkeit des Siebes ist gegeben, wenn das Rohrstück in Fig. 3 und 4 der Zeichnung von rechts nach links durchströmt wird.

Bei der Ausbildung des Anschlußstückes aus thermoplastischen Kunststoffen ist beim Anschließen des Anschlußstückes an die Leitung und bzw. oder das Gerät eine ausreichende Abdichtung möglich, ohne daß gesonderte Dichtelemente wie O-Ringe od.dgl. notwendig sind, welche die Anwendung des Anschlußstückes bei bestimmten aggressiven Strömungsmitteln problematisch machen könnten.

Im Falle des Schadhaftwerdens des Siebgewebes kann das Anschlußstück als Komplettbauteil leicht ausgetauscht werden, was in der Reduzierung in der Einzelteile sowohl im Fertigungsablauf als auch in der Ersatzteilhaltung Vorteile bringt.

Die Herstellung des Anschlußstückes der in der Zeichnung dargestellten Ausführungsform kann rationell dadurch erfolgen, daß das Siebgewebe in Form eines vorgeschnittenen Streifens in die Spritzform der Kunststoffspritzmaschine eingeführt, darin festgehalten und in seine in Fig. 3 gezeigte V-Form gezogen wird, worauf dieser Gewebestreifen mit seinem Befestigungsrand 11, 12 in den Kunststoff des herzustellenden Anschlußstückes eingespritzt werden kann.

## Patentansprüche

1. Anschlußstück für den Anschluß von Rohr- oder Schlauchleitungen an von einem flüssigen oder gasförmigen Strömungsmittel durchströmte Geräte, wie z.B. Pumpen, Öl- oder Gasbrenner, Druckwasserreinigungsgeräte od.dgl., das eine zum lösbaren Anschließen an die Leitung ausgebildete Seite und eine andere zum lösbaren Anschließen an den Strömungsmitteleinlaß des Gerätes oder an einen an diesen Einlaß angesetzten Leitungsabschnitt ausgebildete Seite sowie einen sich von der einen zur anderen Seite erstreckenden Durchströmungskanal (5) hat, in welchem ein den Kanalquerschnitt völlig überspannendes Siebgewebe (6) angeordnet ist, dadurch **gekennzeichnet,** daß das Siebgewebe (6) in Längsrichtung des Durchströmungskanals (5) V-Form hat.

2. Anschlußstück nach Anspruch 1, dadurch gekennzeichnet, daß das Siebgewebe (6) mit den Seitenrändern (12) seiner V-Form an der Wandung des Anschlußstückes unlösbar befestigt ist.

3. Anschlußstück nach Anspruchen 1, dadurch gekennzeichnet, daß die beiden die Schenkel der V-Form bildenden Abschnitte (8) des Siebgewebes (6) je einen im wesentlichen sich senkrecht zum Durchströmungskanal (5) erstreckenden Rand (11) haben, der an der Wandung des Anschlußstückes unlösbar befestigt ist.

4. Anschlußstück nach einem oder mehreren der Ansprüche 1 bis 3, dadurch gekennzeichnet, daß es aus Gußmaterial, z.B. Kunststoff, besteht und daß das Siebgewebe (6) an seinen Rändern (11, 12) in das Anschlußstück eingegossen ist.

5. Anschlußstück nach Anspruch 1, dadurch gekennzeichnet, daß die V-Form des Siebgewebes (6) ausgerundet ist.

6. Anschlußstück nach Anspruch 1, dadurch gekennzeichnet, daß die Tiefe der V-Form größer ist als der Querschnitt des Durchströmungskanals (5) im Bereich des Siebgewebes (6).

7. Anschlußstück nach einem oder mehreren der Ansprüche 1 bis 6, dadurch gekennzeichnet, daß es zum Anschluß an die Leitung und den Strömungsmitteleinlaß des Geräts mit Schraubgewinden versehen ist.

8. Anschlußstück nach einem oder mehreren der Ansprüche 1 bis 7, dadurch gekennzeichnet, daß es an seiner Außenseite zumindest stellenweise uneben gestaltet, z.B. aufgerauht oder mit einer Rändelung (4) versehen ist.

# Fig. 1

# Fig. 2

# Fig. 3

# Fig. 5

# Fig. 4

EP 0 481 219 A2